# EUROPEAN PATENT APPLICATION

(11) **EP 4 545 929 A1**
(43) Date of publication of application: **30.04.2025**
(21) Application number: 23827279.3
(22) Date of filing: 22.06.2023
(51) Int. Cl.: G01M 99/00, E02F 9/00, G01H 17/00

(54) **MACHINE PERFORMANCE DIAGNOSIS APPARATUS, AND CONSTRUCTION MACHINE DIAGNOSIS SYSTEM**

(30) Priority: 23.06.2022 JP 2022100834
(71) Applicant: Hitachi Construction Machinery Co., Ltd., Tokyo 110-0015 (JP)
(72) Inventor: ELSERAFY Hatem, Tokyo 100-8280 (JP); MATSUMOTO Nagisa, Tokyo 100-8280 (JP); KAKIDA Masayuki, Tokyo 100-8280 (JP)
(74) Representative: MERH-IP Matias Erny Reichl Hoffmann Patentanwälte PartG mbB
(86) International application number: PCT/JP2023/023219
(87) International publication number: WO 2023/249097

(57) **Abstract**

The present disclosure proposes a machine performance diagnosis apparatus for diagnosing soundness of operation of a construction machine for reducing possibility of human error and obtaining more accurate diagnosis results. The machine performance diagnosis apparatus includes a storage device and a processor. The storage device stores reference waveform data for each of a plurality of operations of the construction machine, a performance reference value and a tolerance value for each of the plurality of operations. The processor executes a process of diagnosing the soundness of the construction machine. The processor executes a process of identifying an actually performed operation of the construction machine by comparing the sensor waveform data acquired by detecting the actually performed operation using a sensor with the reference waveform data held in the storage device, and a process of acquiring the performance reference value and the tolerance value corresponding to the identified operation from the storage device, and comparing the acquired performance reference value and tolerance value with the feature value in the actually performed operation acquired from the sensor waveform data to determine the soundness of the construction machine (see Fig. 2).

## Description

### Technical Field

The present disclosure relates to a machine performance diagnosis apparatus and a construction machine diagnosis system.

### Background Art

When it comes to construction machines, it is important to measure their basic performances, diagnose, predict potential malfunctions in advance, and carry out maintenance before a malfunction occurs, so as to avoid interrupting construction work. The basic performance refers to an inherent performance and a reference specification of the construction machine. In this respect, the market requires tools for automatic self-diagnosis of malfunctions (automatic self-diagnosis tools) that are easy to use, inexpensive, and easy to use even for unskilled operators.

For example, Patent Literature 1 discloses that, as an automatic self-diagnosis technology, in order to shorten a diagnosis time, the presence or absence of abnormalities in each portion of a construction machine is diagnosed based on an operating noise of the construction machine, and when an abnormality is diagnosed, a cause of the abnormality is identified based on information on the abnormality-diagnosed portion, and the identification result is displayed.

### Citation List

### Patent Literature

Patent Literature 1: JP 2021-67614 A

### Summary of Invention

### Technical Problem

The basic performance measurements are different in vehicle posture, operation, and procedure to be taken depending on portions to be diagnosed. Thus, it is necessary to take different approaches corresponding to each diagnostic portion. Therefore, when carrying out the measurements, it is necessary to confirm the procedures and the like, and confirm the vehicle posture, operation, and measurement procedure to be taken for each diagnosis target. Thus, the preparation work is complicated. In addition, when actually carrying out the measurement work, it is necessary to prepare dedicated equipment and pay attention to a timing of the measurement and the like as the diagnosis result is affected depending on a measurement method. Thus, it has become a task that relies on a skill of a person carrying out the measurement, and it is a task that requires time and effort.

In view of this situation, this disclosure proposes a technology that reduces a workload of a measurer and also obtains a more accurate diagnosis result.

### Solution to Problem

In order to solve the above problem, this disclosure proposes a machine performance diagnosis apparatus for diagnosing soundness of operation of a construction machine. The machine performance diagnosis apparatus includes a storage device and a processor. The storage device stores reference waveform data for each of a plurality of operations of the construction machine, a performance reference value and a tolerance value for each of the plurality of operations. The processor executes a process of diagnosing the soundness of the construction machine. The processor executes a process of identifying an actually performed operation of the construction machine by comparing the sensor waveform data acquired by detecting the actually performed operation using a sensor with the reference waveform data held in the storage device; and a process of acquring the performance reference value and the tolerance value corresponding to the identified operation from the storage device, and comparing the acquired performance reference value and tolerance value with the feature value in the actually performed operation acquired from the sensor waveform data to determine the soundness of the construction machine.

Further features related to the present disclosure will become clear from the description in this document and the attached drawings. In addition, the manner of this disclosure is achieved and realized by the manner of the elements and the combination of various elements and the detailed description and the attached claims. The descriptions in this document are merely typical examples, and in no way limit the scope of the claims or examples of application of this disclosure.

### Advantageous Effects of Invention

According to the technology disclosed herein, the workload of the operator (user) when diagnosing the construction machine can be reduced. In addition, the highly accurate and reliable soundness diagnosis will be realized.

### Brief Description of Drawings

Fig. 1 is a schematic configuration example of a construction machine diagnosis system according to the present embodiment.
Fig. 2 is a block diagram illustrating a schematic functional configuration example of a performance measurement device 1 of the construction machine according to the present embodiment.
Fig. 3 is a diagram illustrating an internal functional configuration example of an information acquisition section 101 of the performance measurement device 1.
Fig. 4 is a diagram illustrating an internal functional configuration example of a soundness diagnosis section 102 of the performance measurement device 1.
Fig. 5 is a diagram illustrating an internal functional configuration example of an operation classification section 103 of the performance measurement device 1.
Fig. 6 is a diagram illustrating an internal functional configuration example of a basic performance measurement and diagnosis section 104 of the performance measurement device 1.
Fig. 7 is a diagram illustrating a configuration example of a history log list as an example of information held in a data storage section 201 included in a storage device 20 of the performance measurement device 1.
Fig. 8 is a diagram illustrating a configuration example of performance reference value information 801 held in a performance reference value holding section 202 included in the storage device 20 of the performance measurement device 1.
Fig. 9 is a diagram illustrating a configuration example of operating range reference value information 901 held in an operating range reference value holding section 203 included in the storage device 20 of the performance measurement device 1.
Fig. 10 is a diagram illustrating a configuration example of operation-specific representative waveform information 1001 held in an operation-specific representative waveform holding section 204 included in the storage device 20 of the performance measurement device 1.
Fig. 11 is a diagram illustrating a configuration example of recommendation information 1101 held in a recommendation information holding section 205 included in the storage device 20 of the performance measurement device 1.
Fig. 12 is a diagram illustrating a configuration example of an action list information (table) 1201 held in an action list holding section 206 included in the storage device 20 of the performance measurement device 1.
Fig. 13 is a diagram illustrating an example of input information 1301 to the performance measurement device 1 and an example of output information 1302 from the relevant device 1.
Fig. 14 is a diagram illustrating a configuration example of a graphical user interface (GUI) displayed on a display screen of the performance measurement device 1 or a display screen of a user terminal 4.
Fig. 15 is a flowchart for describing a performance measurement and diagnosis process by the present embodiment.

### Description of Embodiments

### <Example of System Configuration>

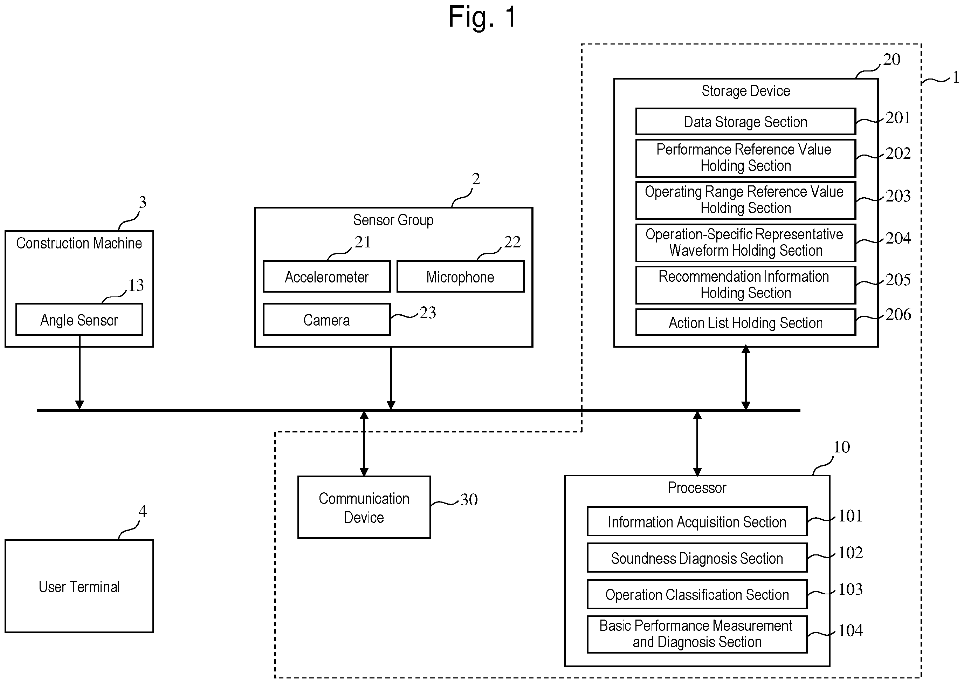

Fig. 1 is a schematic configuration example of a construction machine diagnosis system according to the present embodiment.

A construction machine diagnosis system includes a performance measurement device 1, a sensor group 2, a construction machine 3, and a user terminal 4. In a system configuration example in Fig. 1, the user terminal 4 and the performance measurement device 1 are illustrated as separate devices, but it is also possible to implement each function of the performance measurement device 1 and each data holding/storage section, and the like, in the user terminal 4.

The performance measurement device 1 includes, for example, a processor 10, a storage device 20, and a communication device 30.

The sensor group 2 includes a plurality of different sensors that can be used in an application program for soundness diagnosis of construction machines, and can include, for example, an accelerometer 21, a microphone 22, and a camera 23 (not limited to these). The accelerometer 21 is a micro-electromechanical system (MEMS) scale sensor that is possibly incorporated into a device to measure acceleration having an ability to detect gravity and vibration. The microphone 22 may be a stand-alone microphone or a small microphone built in the performance measurement device 1. The camera 23 may be a stand-alone small camera or a small camera built in the performance measurement device 1 or the user terminal 4.

The construction machine 3 is, for example, a variety of construction machines, such as a hydraulic excavator, a wheel loader, and a bulldozer. The construction machine 3 includes an angle sensor 13 that detects current angles of movable parts of the construction machine 3 (for example, a boom, an arm, a bucket, and the like in the case of the hydraulic excavator). The user terminal 4 can be constituted of a computer device such as a smartphone, a microcontroller, and a personal computer (PCs).

The processor 10, the storage device 20, and the communication device 30 of the performance measurement device 1, the various sensors of the sensor group 2, and the angle sensor 13 of the construction machine 3 are connected via a communication bus, for example. In addition, the communication device 30 is configured to be able to transmit diagnosis results, for example, to the user terminal 4 via wireless communication.

The processor 10 is constituted of an arithmetic device, such as a CPU, and reads various related programs from the storage device 20 and expands them in an internal memory (not illustrated in the figures) to generate each processing section. Each of these processing sections includes an information acquisition section 101, a soundness diagnosis (inspection) section 102, an operation classification section 103, and a basic performance measurement and diagnosis section 104. The details of the operations of respective processing sections are described below.

The storage device 20 includes a data storage section 201, a performance reference value holding section 202, an operating range reference value holding section 203, an operation-specific representative waveform holding section 204, a recommendation information holding section 205, and an action list holding section 206.

The operation-specific representative waveform holding section 204 holds, for example, a typical sensor waveform for each machine operation that serves as a basis for classifying a new machine operation to be diagnosed (inspected).

The recommendation information holding section 205 holds information on recommendations to be presented to an operator depending on a state of the soundness of the construction machine. For example, this is information about a recommendation such as "The arm cylinder seems to be in bad state. Please show this report to a maintenance department and have them take action."

The action list holding section 206 holds information on all the related operations for a specific diagnostic (inspection) type. Examples of the operations as the diagnosis target include (a) an arm crowd (pulling operation), (b) an arm dump (pushing operation), (c) a boom raise, (d) a boom lower, (e) a bucket crowd, and (f) a bucket dump.

### <Example of Performance Measurement Device Configuration>

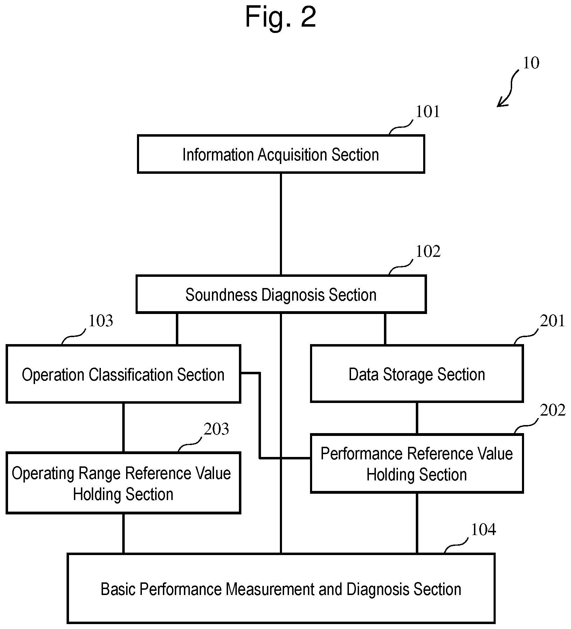

Fig. 2 is a block diagram illustrating a schematic functional configuration example of the performance measurement device 1 of the construction machine according to the present embodiment.

The main functions of the performance measurement device 1 are realized by the information acquisition section 101, the soundness diagnosis section 102, the data storage section 201, the operation classification section 103, the performance reference value holding section 202, the operating range reference value holding section 203, and the basic performance measurement and diagnosis section 104.

The information acquisition section 101 aggregates the sensor data in a predetermined format and makes it ready for processing. Examples of the sensor data include accelerometer data that detects a load vibration of the construction machine, and examples of the load include the arm.

The soundness diagnosis section 102 processes the data acquired from the information acquisition section 101 and outputs the diagnosis result indicating a soundness of a specific machine and a soundness of a specific load (whether it is in sound state or not). For example, the soundness diagnosis section 102 uses an accelerometer to process a vibration acquired from an operation inspection of the arm of the construction machine, and then outputs information indicating how long it took for the machine to perform the arm crowd based on the peak level of the vibrations.

The data storage section 201 is constituted of a storage device and holds the aggregated sensor data from the information acquisition section 101.

The operation classification section 103 processes the data acquired from, for example, the information acquisition section 101 and the soundness diagnosis section 102, and outputs information on a type of an operation performed during the diagnosis. One example of the processing performed by the operation classification section 103 is to classify a machine operation as the arm crowd using the waveform detected by the accelerometer.

The performance reference value holding section 202 holds (stores), for example, information on reference values (standard values) for the sound state of the machine operations to be inspected that have been set by the manufacturer (Maker). Examples of information on the reference values for the sound state include information on the arm crowd operation of a specific construction machine that ideally takes 3.9+/-0.4 seconds.

The operating range reference value holding section 203 holds (stores), for example, the reference value (the standard value) of the operating range of the construction machine. Examples of reference value information on the operating range include information on the boom raise from 0 degrees to 90 degrees.

The basic performance measurement and diagnosis section 104 is configured, for example, with the processor (or as a part of functions of the processor), and collects calculation results of the soundness diagnosis section 102 and the operation classification section 103. By comparing them with specific reference values (performance reference values acquired from the performance reference value holding section 202), the basic performance measurement and diagnosis section 104 diagnoses (determines) an extent to which the current sound state of the construction machine deviates from an ideal case set by the manufacturer.

In addition, the basic performance measurement and diagnosis section 104 requests data on the operating range reference value corresponding to the current construction machine from the operating range reference value holding section 203 in order to verify the correct operating range. The basic performance measurement and diagnosis section 104 then transfers the operating range reference value information to the user terminal 4 (mobile terminal (smartphone) or computer (PC)), for example, and displays the information on its output screen (when the performance measurement device 1 is implemented in the user terminal 4, the information on the operating range reference value and the like will be output directly to the display screen). This allows the operator to confirm whether the operation of the construction machine during the diagnosis was within the correct operating range, and to determine whether the construction machine is in sound state.

A specific example from the operation classification process by the operation classification section 103 to the basic performance measurement and diagnosis process by the basic performance measurement and diagnosis section 104 is described. For example, when the diagnosis by the soundness diagnosis section 102 has acquired a result of 3.6 seconds for the operation time, the operation classification section 103 compares the diagnosis result of the soundness diagnosis section 102 with the corresponding operation reference value of the construction machine of 3.5±0.4 seconds held in the performance reference value holding section 202, and classifies the operation of the diagnosis target as the arm crowd. The basic performance measurement and diagnosis section 104 determines whether the operation range is correct or not by setting the reference operation range for the arm crowd to a starting angle position of 170 degrees and an ending angle position of 15 degrees, and confirming these values using the angle sensor built in the construction machine. Ultimately, these results are displayed on the display screen of the user terminal of the operator. This allows the operator to know that a motor of the construction machine executing the arm crowd is in sound state.

### <Internal Functional Configuration Example of Information Acquisition Section 101>

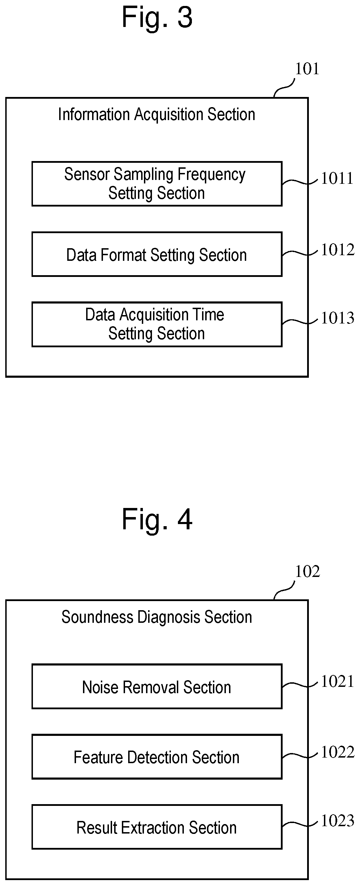

Fig. 3 is a diagram illustrating an internal functional configuration example of the information acquisition section 101 of the performance measurement device 1.

The information acquisition section 101 includes a sensor sampling frequency setting section 1011, a data format setting section 1012, and a data acquisition time setting section 1013.

The sensor sampling frequency setting section 1011 has a function for setting the sampling frequency for acquiring data from any of the sensor group 2 (for example, the accelerometer). The sampling frequency may be predetermined, or it may be determined by the operator or another user. For example, the sampling frequency for acquiring data from the accelerometer may be set to 100 samples per second.

The data format setting section 1012 has a function for setting the format in which the acquired sensor data is processed. For example, CSV format can be used as a data format.

The data acquisition time setting section 1013 has a function for setting a time limit for the data acquisition. The time limit can be set manually (for example, collecting data for 20 seconds regardless of a length of the test itself) or automatically (asking the operator to start the data acquisition, perform the diagnosis (test), and then stop the data acquisition).

### <Internal Functional Configuration Example of Soundness Diagnosis section 102>

Fig. 4 is a diagram illustrating an internal functional configuration example of the soundness diagnosis section 102 of the performance measurement device 1.

The soundness diagnosis section 102 includes a noise removal section 1021, a feature detection section 1022, and a result extraction section 1023.

The noise removal section 1021 applies a threshold to the waveform data (waveform signal) acquired by the information acquisition section 101 to remove noise signals.

The feature detection section 1022 detects features in the noise-removed waveform signal. For example, this includes a process of detecting peaks in the waveform signal from the accelerometer 21. In the waveform signal from the accelerometer 21, the first peak indicates the start time of the operation of the construction machine, and the other peak indicates the stop time of the operation.

The result extraction section 1023 extracts information on the soundness of the construction machine based on the feature data analyzed and detected by the feature detection section 1022. For example, the time taken for a certain machine operation can be a difference between the start time and the stop time.

<Internal Functional Configuration Example of Operation Classification Section 103>

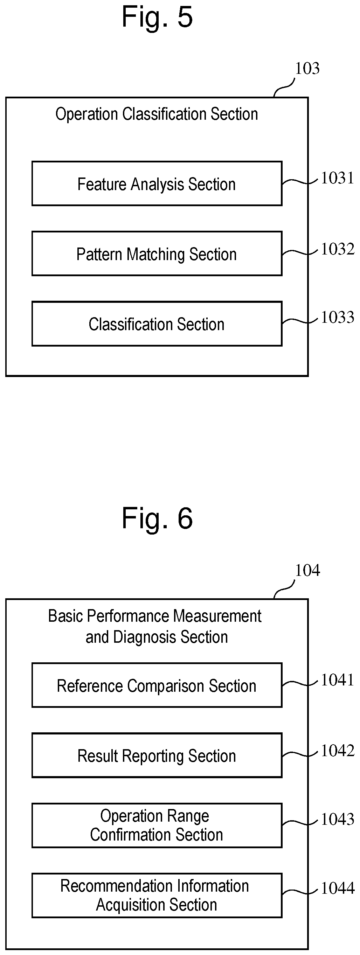

Fig. 5 is a diagram illustrating an internal functional configuration example of the operation classification section 103 of the performance measurement device 1.

The operation classification section 103 includes a feature analysis section 1031, a pattern matching section 1032, and a classification section 1033.

The feature analysis section 1031 analyses various features and collects further information on the operation of the construction machine. Examples of the feature analysis include the analysis of a peak amplitude and a roll-off shape of the signal from the accelerometer 21.

The pattern matching section 1032 matches the information acquired from the feature analysis section 1031 with the patterns held in the operation-specific representative waveform holding section 204, and extracts the matching (within a predetermined error range) patterns.

The classification section 1033 determines (identifies) the type of operation being performed based on the matching result from the pattern matching section.

### <Internal Functional Configuration Example of Basic Performance Measurement and Diagnosis Section 104>

Fig. 6 is a diagram illustrating an internal functional configuration example of the basic performance measurement and diagnosis section 104 of the performance measurement device 1.

The basic performance measurement and diagnosis section 104 includes a reference comparison section 1041, a result reporting section 1042, an operation range confirmation section 1043, and a recommendation information acquisition section 1044.

The reference comparison section 1041 compares the classification results from the operation classification section 103 and the diagnosis (determination) results from the soundness diagnosis section 102 with the performance reference values held in the performance reference value holding section 202 to determine whether or not the construction machine as the diagnosis target (a specific operation, for example, the arm crowd operation) is in sound state.

The result reporting section 1042 creates a report on the soundness of the construction machine and transmits it, along with raw data (the measured data), to the data storage section 201 of the storage device 20. This makes it possible to generate a history log of the soundness of the construction machine.

The operation range confirmation section 1043 acquires the operating range reference values corresponding to the classification results of the operation classification section 103 from the operating range reference value holding section 203 in order to confirm whether the operator of the construction machine as the diagnosis target has performed the diagnosis within the correct operating range, and outputs this information (displays it on the display screen). For example, in the case of an arm pull, the information on the reference operation range held in the operating range reference value holding section 203 is that the starting angle position is 170 degrees and the ending angle position is 15 degrees, and the operator can confirm this using an angle sensor 31 built in the construction machine after the diagnosis has been carried out.

The recommendation information acquisition section 1044 acquires appropriate recommendation information corresponding to the current diagnosis result from information set, which is held in the recommendation information holding section 205 in advance, based on the comparison result by the reference comparison section 1041.

### <Example of Information Held in Data Storage Section 201>

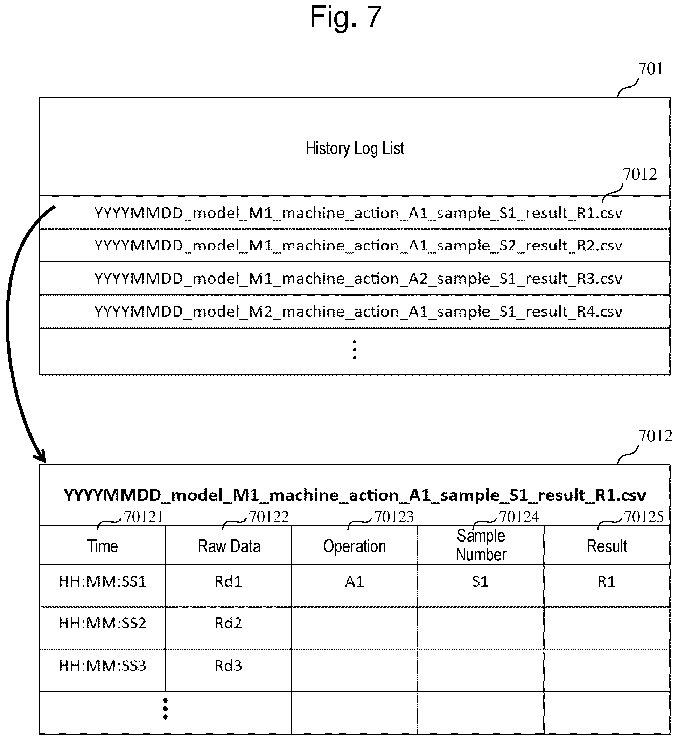

Fig. 7 is a diagram illustrating a configuration example of a history log list as an example of information held in the data storage section 201 included in the storage device 20 of the performance measurement device 1.

The history log list is constituted of a plurality of history files for the respective operations of the construction machine (by model) and for respective samples. For example, when any file (history log file) 7012 is selected from the list illustrated in the upper diagram in Fig. 7, it is possible to view the file contents illustrated in the lower diagram in Fig. 7.

The history file is saved as a CSV file, for example, and the title of the history file includes the date (automatically assigned by the OS of the device), the model of the construction machine (set by the operator), the information on the operation (acquired from the operation classification section 103), the sample number (when the experiment is desired to be repeated, excluding the diagnosis result due to an operator error), and the diagnosis results (information reported from the basic performance measurement and diagnosis section 104).

The lower diagram in Fig. 7 illustrates an example of the history file. The history file 7012 includes the following items: the data acquisition time 70121, raw data 70122, which is the measurement data, an operation 70123, which indicates the operation content, a sample number 70124, and a result 70125, which indicates the diagnosis result.

### <Example of Information Held in Performance Reference Value Holding Section 202>

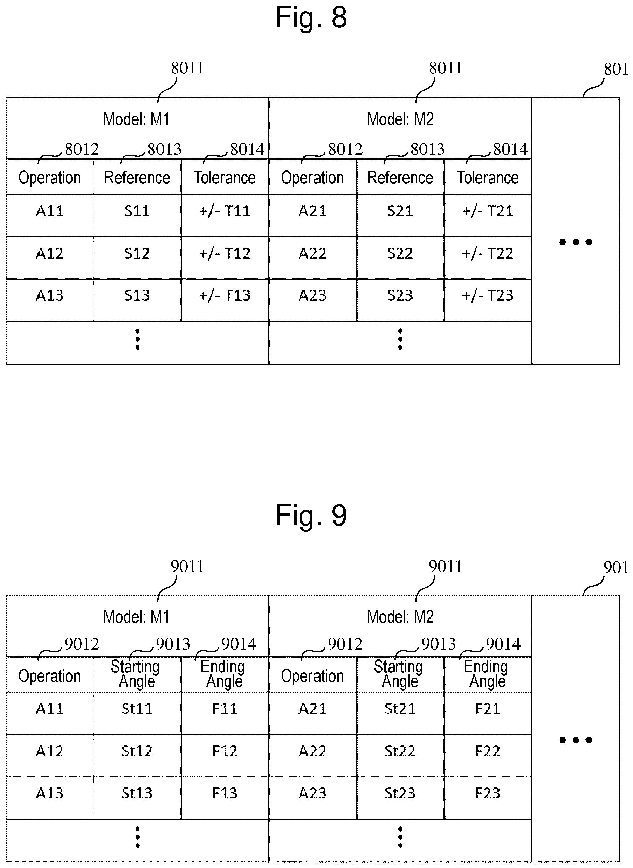

Fig. 8 is a diagram illustrating a configuration example of performance reference value information 801 held in the performance reference value holding section 202 included in the storage device 20 of the performance measurement device 1.

The performance reference value information 801 is management information including an operation 8012, a reference 8013, and a tolerance 8014 for each model 8011.

The model 8011 is information indicating the model (model name) of the construction machine. The operation 8012 is the operation of the applicable model, and includes, for example, the arm crowd and the bucket crowd. The reference 8013 is, for example, the reference time for the corresponding operation (for example, 3.5 seconds). The tolerance 8014 indicates the range (tolerance range: for example, ±0.4 seconds) in which it is allowed to be determined to be normal even when it does not match the reference 8013.

Use of the performance reference value information 801 allows identifying the operation of the diagnosis target. For example, when the diagnosis result of the soundness diagnosis section 102 is 3.6 seconds while the performance reference value information of the operating arm pull of the corresponding model has a reference value of 3.5 seconds and an allowable tolerance range of ±0.4 seconds, it is possible to identify the operation of the diagnosis target as the arm pull.

<Information Example Held in Operating Range Reference Value Holding Section 203>

Fig. 9 is a diagram illustrating a configuration example of operating range reference value information 901 held in the operating range reference value holding section 203 included in the storage device 20 of the performance measurement device 1.

The operating range reference value information 901 is management information including an operation 9012, a start angle 9013, and an end angle 9014 for each model 9011.

The model 9011 is information indicating the model (model name) of the construction machine. The operation 9012 is the operation of the applicable model, and includes, for example, the arm crowd and the bucket crowd. The start angle 9013 is information indicating the start angle of the corresponding operation. The end angle 9014 is information indicating the end angle of the corresponding operation. For example, when it is the boom raise operation, the start angle is 0 degrees and the end angle is 90 degrees.

### <Information Example Held in Operation-Specific Representative Waveform Holding Section 204>

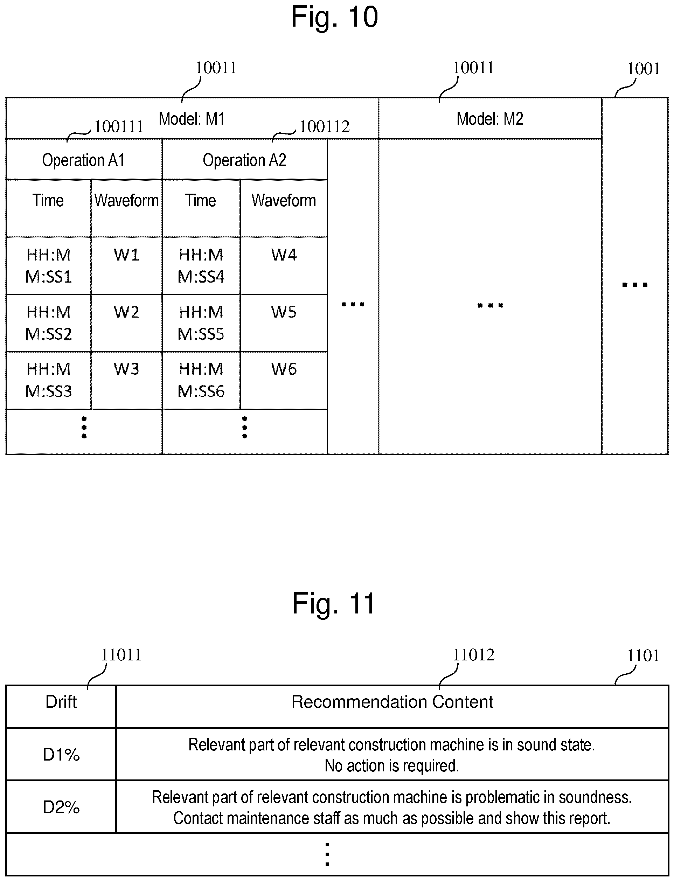

Fig. 10 is a diagram illustrating a configuration example of operation-specific representative waveform information 1001 held in the operation-specific representative waveform holding section 204 included in the storage device 20 of the performance measurement device 1.

The operation-specific representative waveform information 1001 is constituted of the acquisition time information for the representative waveform and the corresponding waveform regarding each operation (100111, 100112) for each model (10011). It is assumed that the different waveforms are held for all the operations that can be used for each model in the operation-specific representative waveform information 1001.

### <Information Example Held in Recommendation Information Holding Section 205>

Fig. 11 is a diagram illustrating a configuration example of recommendation information 1101 held in the recommendation information holding section 205 included in the storage device 20 of the performance measurement device 1.

The recommendation information 1101 includes a drift value 11011 and a corresponding recommendation content (recommended information) 11012 for a solution to deal with the drift value.

The drift value 11011 is information illustrating how far the measurement result is from the reference value, and is displayed as a percentage. For example, the ideal arm crowd duration time for the model is 3.2 seconds, and the tolerance is ±0.3 seconds, so (0.3/3.2) × 100 = 9.4%. When the measurement time was 3.4 seconds, D1 is equal to ((3.4 - 3.2)/3.2) × 100, or 6.25%. In this case, D1 is lower than the 9.4% indicated by the drift value 11011. Thus, the recommendation content 11012 in this case would be "The relevant part of the relevant construction machine is in sound state. No action is required." On the other hand, for example, when the drift D2% of the measurement time is higher than the 9.4% indicated by the drift value 11011, the recommendation content 11012 would be "The relevant part of the relevant construction machine is problematic in sound state. Contact a maintenance staff as much as possible and show this report."

Accordingly, it is possible to present the recommended information in various forms, such as setting an importance (importance of action) according to the degree of deviation from the reference value.

### <Information Example Held in Action List Holding Section 206>

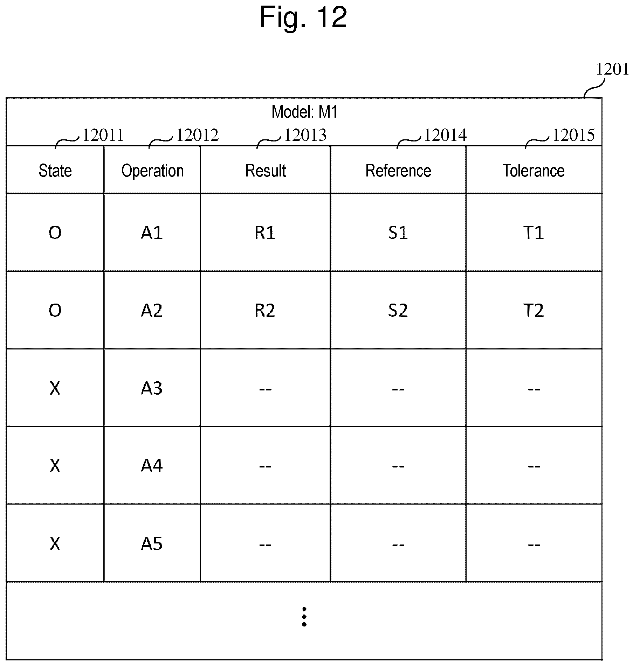

Fig. 12 is a diagram illustrating a configuration example of action list information (table) 1201 held in the action list holding section 206 included in the storage device 20 of the performance measurement device 1.

Action list information 1201 includes a state 12011 and an operation 12012 for each model.

The state 12011 is information indicating whether or not the operation diagnosis has been completed. When the operation diagnosis has been completed, it is indicated by a "O" mark, and when the operation diagnosis has not been completed, it is indicated by an "X" mark. Thus, the diagnostic state of the corresponding operation can be indicated.

In addition, the user may be able to visualize the overall state of the machine by adding the following fields: results (diagnosis result) 12013, references (the reference value) 12014, allowable tolerances (the allowable tolerance ranges for the reference values) 12015, and other fields (not illustrated in the diagram).

The action list information 1201 can be used to indicate whether the soundness of a particular model of the construction machine has been diagnosed. This allows the user to confirm which operations are available to them, and also enables them to track which operations have been diagnosed and which have not.

In addition, the storage device 20 of the performance measurement device 1 may be configured to pre-hold the action list information 1201, in which the state 12011 is blank (or the state of all the operations is uncompleted (X)) for all the models of all the construction machines, in the action list holding section 206. When the operator starts diagnosing the target construction machine 3, all the operations of the construction machine 3 may be registered in an action list holding section 106 as the action list information 1201. When there is a construction machine of the same model that has been diagnosed in the past, the action list information 1201 used in the past can be reused (the information in the previous diagnosis result 12013 and the state 12011 is reset).

### <Input information and Output information>

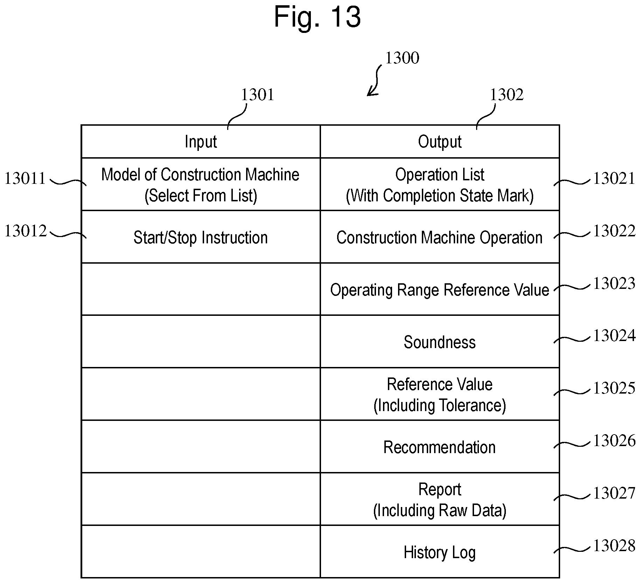

Fig. 13 is a diagram illustrating an example of input information 1301 to the performance measurement device 1 and an example of output information 1302 from the relevant device 1.

The input information 1301 includes, for example, a model 13011 of the construction machine, the start instruction (pressing down the start button) to start the data collection before the diagnosis, and a stop instruction (pressing down the stop button) 13012 to stop/end the diagnosis. However, the input information 1301 is not limited thereto. It is also possible to automatically stop it after a certain period of time.

The output information 1302 includes, for example, an operation list (with completion state mark) 13021, a construction machine operation 13022, an operating range reference value 13023, a soundness 13024, a reference value (including a tolerance) 13025, a recommendation 13026, a report 13027, and a history log 13028.

By outputting the operation list 13021, the user can keep track of which machine operations have already been diagnosed and which operations have not been completed. As illustrated in Fig. 12, the operations that have been diagnosed can include a mark (O) indicating that the diagnosis has been completed.

By outputting the construction machine operation 13022, it will be possible to confirm the operations of the construction machine (for example, the arm crowd) that have been automatically classified in the diagnosis carried out this time.

By outputting the operating range reference value 13023, it is possible to provide information to confirm whether the operator of the construction machine has performed the operation correctly. For example, by outputting the reference start angle and the reference end angle, the operator can confirm whether the operating range matches the reference value by comparing it with the angle of the angle sensor 31 built in the construction machine 3.

By outputting the soundness 13024, it is possible to provide information for confirming whether the portion (for example, the arm) that performs the operation is in sound state or not, based on the target operation diagnosis. As the information indicating the soundness 13024, for example, it is possible to output the results of a recently performed test.

By outputting the information on the reference value (including the tolerance) 13025, it is possible to provide information for confirming the reference value (including the tolerance) for diagnosis of a specific operation of a specific construction machine.

By outputting the recommendation 13026, the operator (the user) can interpret the information on the soundness 13024 and provide the information (recommendations) for determining whether or not a maintenance staff should be contacted.

The report 13027 can be output as information that adds the raw data to all of the above-described outputs 13021 to 13026.

By outputting the history log 13028, it is possible to provide information that is useful for the user to track all the past diagnostic contents.

### <Configuration Example of GUI>

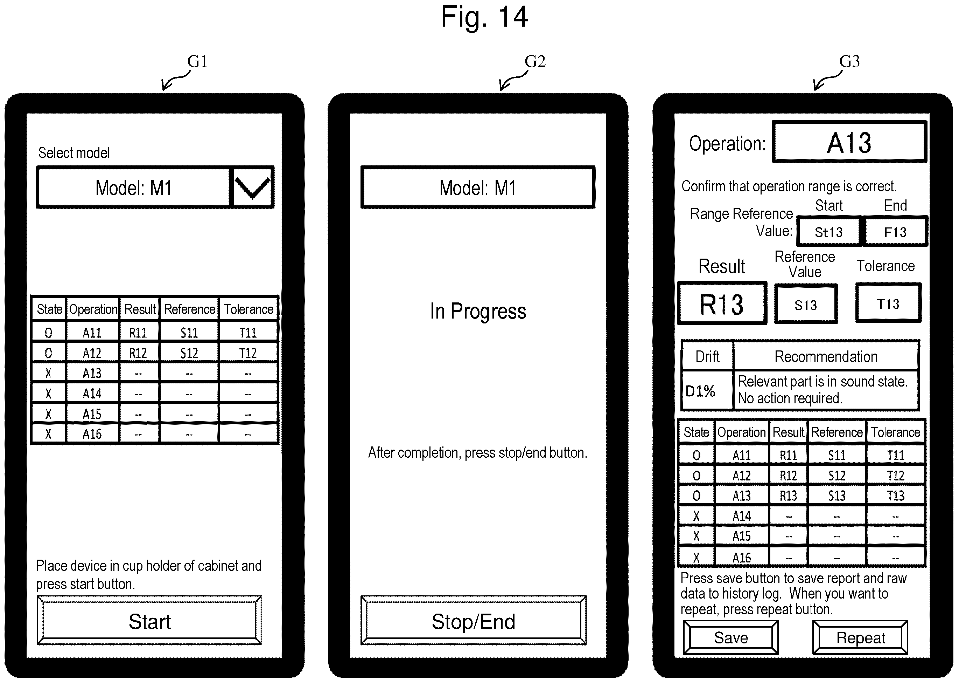

Fig. 14 is a diagram illustrating a configuration example of a graphical user interface (GUI) displayed on a display screen of the performance measurement device 1 or a display screen of the user terminal 4. For example, examples of the GUI include an input GUI (input screen)_G1, an execution-time GUI (execution screen)_G2, and a diagnosis-result displaying GUI (result screen)_G3.

The input GUI (input screen)_G1 allows entering the model (model number) of the construction machine. In addition, the input GUI (input screen)_G1 allows confirming the operations that have been diagnosed and those that have not yet been diagnosed. In the example in Fig. 14, there are six operations available, and it is illustrated that only the first two have been diagnosed. In the case of the input GUI (input screen)_G1, the method for starting the diagnosis may be displayed, or the diagnosis may be started by simply pressing down the start button.

In the execution-time GUI (execution screen)_G2, it is indicated that the operation of the construction machine selected by the user (or operator) is in progress. After the operation is completed, the operator presses the stop button.

The diagnosis-result displaying GUI (result screen)_G3 displays the classified operations and the reference range for the operator to confirm, but it is also possible to display instructions asking the operator to confirm the operation range. In addition, the diagnosis results are displayed as a reference together with the reference values and the allowable ranges, and the drift values and the recommendation information are also displayed. Furthermore, the action list (the table: see Fig. 12) is displayed together with the information on the operations marked as completed (O) or not yet completed (X). In the example in Fig. 14, the operation A13 is marked as completed (O), and the diagnosis results are entered in the action list.

The diagnosis-result displaying GUI (result screen)_G3 can include a save button and a repeat execution instruction button. When the operator (the user) presses down the save button, the report and the raw data are saved in the history log. When the measurement is not performed correctly, when the operation range is not correct, or when some other problem occurs, the operator (the user) can press down the repeat button to switch the display screen to the input GUI (input screen)_G1 without recording the erroneous measurement result and the like.

### <Performance Measurement and Diagnosis Processing>

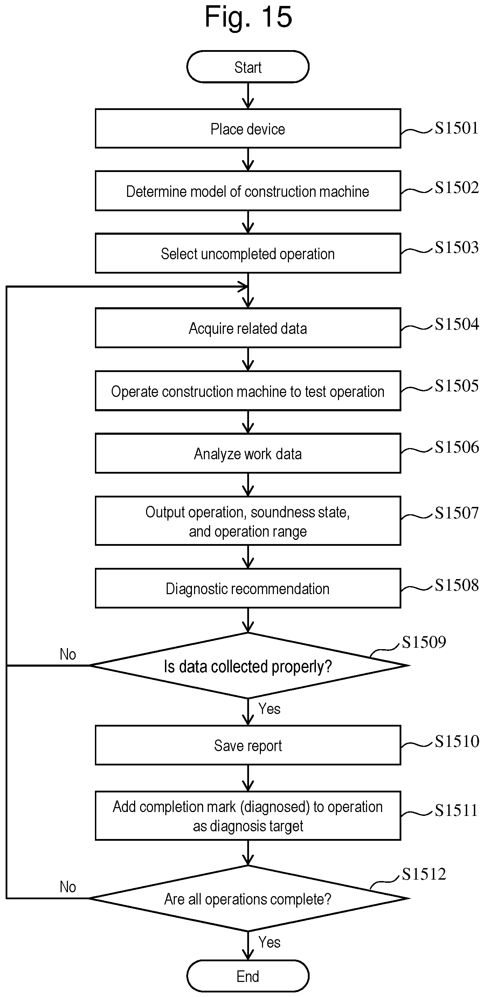

Fig. 15 is a flowchart for describing a performance measurement and diagnosis process by the present embodiment.

### (i) Step S1501

The operator places the performance measurement device 1 (or a terminal (smartphone with built-in accelerometer) on which the functions of the device are implemented) in a predetermined location on the construction machine as the diagnosis target (for example, in a cup holder in a cabinet or in a box provided on the floor, or the like) appropriately placed to detect (pick up) the vibrations of the construction machine in operation, and instructs the performance measurement device 1 to start the diagnosis (for example, by pressing down the diagnosis start button), the processor 10 accepts the instruction. The location of the device may be different depending on the type of sensor.

### (ii) Step S1502

The processor 10 prompts the operator to enter (select) the model of the construction machine, and accepts the input of the model information of the construction machine from the operator.

### (iii) Step S1503

The operator confirms the operations of the construction machine that have not yet been diagnosed from the action list information 1201 (see Fig. 12) and selects the next operation as the diagnosis target. The action list information 1201 lists all the operations as the diagnosis target, and the operations that have been diagnosed are marked with a completion (O) mark, while the operations that have not yet been diagnosed are marked with an incomplete (X) mark. When the operator selects an operation as the diagnosis target, the processor 10 accepts the selection. The operations of the construction machine selected by the operator include, for example, the arm crowd, the arm dump, the boom raise, the boom lower, the bucket crowd, and the bucket dump.

### (iv) Step S1504

The information acquisition section 101 of the processor 10 starts acquiring the related data. For example, when the operator presses down the data acquisition start button on the screen of the performance measurement device 1 (smartphone), the information acquisition section 101 operates at least one of the sensor group 2 (for example, the accelerometer 21) and collects the data acquired by the sensor.

### (v) Step S1505

When the operator operates the construction machine and executes the operation selected in Step S1504 (for example, the arm crowd), the soundness diagnosis section 102 collects the data acquired by at least one of the sensor group 2 during the operation and stores it in the data storage section 201.

### (vi) Step S1506

The processor 10 analyses the data collected in Step S1505 and generates several analysis results.

For example, the soundness diagnosis section 102 calculates the time taken for the operation from the data acquired by the sensor (for example, the peak value of the vibration waveform acquired by the accelerometer), and stores the analysis data (vibration waveform and peak-to-peak time) in the data storage section 201, while also passing it on to the operation classification section 103.

The operation classification section 103 acquires the analysis data acquired by the soundness diagnosis section 102, compares the analysis data (for example, the vibration waveform) with the waveform held in the operation-specific representative waveform holding section 204 in advance, and identifies the operation as the diagnosis target.

The basic performance measurement and diagnosis section 104 acquires the operating range reference value data corresponding to the operation identified by the operation classification section 103 from the operating range reference value holding section 203, compares the operating range reference value with the analysis data, and determines whether the construction machine as the diagnosis target is in sound state (by how much it deviates from a sound state) with regard to the operation.

### (vii) Step S1507

The processor 10 transfers the operation identified by the operation classification section 103, the soundness determined by the basic performance measurement and diagnosis section 104, and the operating range (including the operating range reference value information) to the user terminal 4 (for example, a mobile terminal (smartphone) or a computer (PC)), and displays the relevant information on the output screen thereof.

More specifically, which operation is selected by the operator (the user), the operating range (the starting position and the stop position) for confirming whether the operator performed the operation correctly, and the soundness of the construction machine (execution time of the operation) compared with the reference value (the reference value at the time of manufacture) are output. This information can be used as the reference for determining what states are in the soundness and what states are not in the soundness.

### (viii) Step S1508

The processor 10 acquires the recommendation content 11012 (see Fig. 11) corresponding to the diagnosis result of the basic performance measurement and diagnosis section 104 from the recommendation information holding section 205, and displays it on the screen of the user terminal 4, for example (see the diagnosis-result displaying GUI (result screen)_G3 in Fig. 14).

As described in Fig. 11, the recommendation content 11012 is generated (selected) based on the extent to which the soundness of the operation of the construction machine deviates from the reference value (the reference value at the time of manufacture). For example, when the soundness of the construction machine deviates from the manufacturing reference value by D%, the recommendation such as "The relevant part of the relevant construction machine is problematic in sound state. Contact a maintenance staff as much as possible and show this report."

### (ix) Step S1509

The operator determines whether the sensor data has been collected properly, and when it has been collected properly, the operator presses down the save button, and when it has not been collected properly, the operator presses down the repeat button. The processor 10 determines which button was pressed down. When the save button is pressed down (when Yes in Step S1509), the processing proceeds to Step S1510. When the repeat button is pressed down (when No in Step S1509), the processing proceeds to Step S1504.

### (x) Step S1510

The processor 10 saves the reports (the operation type of the construction machine, the diagnosis result, the recommendation information) and the raw data as the history log in the storage device. These reports and raw data can be referred to when further analysis is required.

### (xi) Step S1511

The processor 10 assigns a completion (diagnosed) mark (O) to the operation for which the diagnosis was performed in the action list of the construction machine as the diagnosis target.

### (xii) Step S1512

The processor 10 determines whether or not the diagnosis of all the operations of the construction machine as the diagnosis target has been completed. When the diagnosis has been completed for all the operations (when it is Yes in Step S1512), the performance measurement diagnosis process ends. When there is a remaining undiagnosed operation (when it is No in Step S1512), the processing proceeds to Step S1504.

### <Example>

### A: Example 1

### (1) Example of Device implementing the functions of the performance measurement device 1

As described above, the smartphone can be used as an example of a main device implementing the functions of the performance measurement device 1. The micro electro mechanical system (MEMS) sensor (such as the accelerometer) built in the smartphone can be used as the main sensor for the data acquisition. The processing and analysis of the data acquired by the sensor (the accelerometer) can be carried out by the CPU of the smartphone.

The memory of the smartphone can be used to store the raw data and the diagnosis results. In this example, the performance measurement and diagnosis processing functions are implemented in the form of an application on the smartphone.

### (2) Use cases

The following are examples of possible use cases (including the operator operations).
(i) The operator places the smartphone in the cup holder of the cabinet of the construction machine.
(ii) The operator starts the application program for measuring and diagnosing the performance in the smartphone.
(iii) The operator confirms the operation of the construction machine to be diagnosed from the operation list (for example, the arm crowd).
(iv) When the operator presses the start button, the sensor (the accelerometer) starts to acquire data.
(v) The operator operates the construction machine and performs the arm crowd operation.
(vi) During the operation, the accelerometer of the smartphone detects the vibrations inside a casing of the smartphone.
(vii) After the arm crowd operation is complete, the operator presses the stop button to stop the data acquisition process.
(viii) The smartphone will begin to analyze the aggregated accelerometer data (which indicates the vibration levels and the start time and the stop time of the arm crowd test).
(ix) Algorithm configuration
   (ix-1) Automatic measurement of the operation time of the construction machine

The start time and the stop time of the construction machine operation can be automatically detected using the data from the accelerometer 21. For example, the maximum point of the waveform data acquired by the accelerometer 21 is detected, and this is processed using a threshold value. The peak detection is performed, and it is possible to assume that the first peak is the start time and the last peak is the stop time, and the time between these peaks can be considered to be the operation time of the construction machine.

### (ix-2) Automatic classification of the construction machine operations

With regard to the operations of the construction machine as the diagnosis target, it is possible to automatically detect which operation has been performed by performing the peak analysis of the waveform data from the accelerometer 21. For example, the peak amplitude of the waveform data is detected and the pattern matching is performed. The peaks are classified based on the pattern matching results.

### (x) Screen output

The screen of the smartphone (the result screen_G3) displays the type of the operation of the construction machine (for example, the arm crowd), the operating reference range (for example, the start angle 170 degrees, the end angle 10 degrees), the operation time, the reference time and the tolerance, the recommendation comment (including the drift value), the action list (updated version) including the recently diagnosed operation (for example, the arm crowd) with the completion mark (O) and the result display, the save button for saving the report and the raw data, and the repeat button (for example, when the operator performed the operation in the operation range different from the reference) for repeating the test in the event of an error (for example, the operator error) (see Fig. 14).

### B: Example 2

As Modification of Example 1, it is possible to use a microcontroller such as an Arduino (registered trademark) with a built-in accelerometer. The same processing described in Example 1 can be repeated (wirelessly or wired) using the microcomputer connected to the computer to control and visualize the output. Some microcomputers have a built-in CPU and a memory and can function as long as a display device is connected.

### <Summary>

(i) According to the present embodiment, the performance measurement device 1 (the machine performance diagnosis apparatus) executes a process of identifying the actually performed operation by comparing the sensor waveform data acquired by detecting the actually performed operation (for example, the arm crowd) of the construction machine (for example, the hydraulic excavator) using the sensor (for example, the accelerometer 21) with the reference waveform data (the operation-specific representative waveform data) held in advance in the storage device, and a process of determining the soundness of the construction machine by acquiring the performance reference value and the tolerance value (see Fig. 8) corresponding to the identified operation from the storage device and comparing the performance reference value (the reference time for the operation) and the tolerance value with the feature value of the actually performed operation (for example, the time between the peaks in the sensor waveform: the actual time taken for one operation (the operation time)). In other words, when the feature value of the operation (the operating time) is within the allowable tolerance range of the reference value, the operation of the construction machine is determined to be in sound state, and when not, it is determined to have a problem with its soundness. The determination result of this soundness is output to the display section of the user terminal 4, such as the smartphone implementing the performance measurement device 1, or to the display section of the user terminal 4, such as a smartphone, which is independent of the performance measurement device 1. This will allow the operator to determine the need for maintenance of the construction machine by looking at the determination result regarding the soundness.
(ii) The performance measurement device 1 may output the values detected by the angle sensor for the angle of a predetermined portion (for example, the arm or the boom) of the construction machine at the start position and the angle of the predetermined portion at the end position when the operation of the construction machine is actually performed, together with the determination result of the soundness of the construction machine, to the display section. This allows the operator to determine whether the operation has been performed correctly. When the operation has not been performed correctly, the diagnosis result for the operation can be discarded (reset) and the diagnosis for the same operation can be performed again.
(iii) The performance measurement device 1 further holds a plurality of types of recommendation information on the solution corresponding to the deviations from the performance reference value in the storage device 20, and may be configured to output the recommendation information corresponding to the soundness determination result together with the determination result, to the display section. Even an inexperienced operators is able to recognize what kind of solution to take when there is a problem with the soundness of the construction machine.
(iv) The performance measurement device 1 further holds the action list information indicating the diagnostic state (whether the diagnosis is completed or not) and the diagnosis result for each of the plurality of operations of the construction machine in the storage device 20. For the operations for which the process of determining the soundness has been completed in the action list information, the performance measurement device 1 inputs the information indicating the diagnostic state of diagnostic completion and the determination result to update the action list information, and outputs the updated action list information to the display section. Accordingly, it is possible to immediately recognize the extent to which the diagnosis has been completed for the overall operation of the construction machine as the diagnosis target.
(v) When a save instruction by the operator (pressing down the save button displayed on the result display screen_G3) is detected, the performance measurement device 1 saves the determination result and the detection data of the actually performed operation as the diagnosis history log (see Fig. 7) in the storage device 20. By referring to the diagnostic history log, it is possible to confirm whether the construction machine has been regularly diagnosed for the soundness of each operation, as well as whether there is any gradual deterioration, even when there are no problems with the soundness.
   On the other hand, when a repeat instruction by the operator (pressing down the repeat button displayed on the result display screen_G3) is detected, the performance measurement device 1 resets the determination result and the detection data of the identified operation by the sensor, and then performs the diagnosis again for the same operation. This makes it easier to verify the diagnosis results because the data on the relevant operation is not recorded in the diagnosis history log when the operator was unable to properly perform the operation of the portion (for example, the arm) of the construction machine as the diagnosis target.
(vi) As illustrated in Fig. 13, the information that the operator needs to input to the performance measurement device 1 is only information on the model of the construction machine and the instructions to start and stop the diagnosis. On the other hand, the output information from the performance measurement device 1 includes the determination result regarding the soundness, the information on the identified type of the operation, the information on the operating range reference value for the identified operation, the performance reference value for the identified operation, the recommendation information corresponding to the determination result, and the detection data for the identified operation by the sensor. Accordingly, the operator only needs to enter a minimum amount of information to obtain the appropriate diagnosis result (the number of input items can be reduced to the absolute minimum). Thus, the burden on the operator is reduced. Even the operator with little experience can obtain the appropriate diagnosis results. As a result, the possibility of human error can be reduced.
(vii) In the above-described example, the history log is saved in the storage device, but it can also be transferred to a server/cloud server for management, thus unifying and centralizing data and also improving updateability.
(viii) The functions of the embodiments of the present disclosure can also be realized by software program code. In this case, a storage medium storing the program code is provided to the system or device, and the computer (or CPU or MPU) of the system or device reads the program code stored on the storage medium. In this case, the program code itself read from the storage medium will realize the functions of the above-described embodiment, and the program code itself and the storage medium that holds it will constitute the present disclosure. Examples of the storage media for supplying such program code include flexible disks, CD-ROMs, DVD-ROMs, hard disks, optical disks, magneto-optical disks, CD-Rs, magnetic tapes, non-volatile memory cards, and ROMs.

In addition, based on the instructions in the program code, the operating system (OS) running on the computer may perform some or all of the actual processing, and the functions of the above-described embodiments may be realized through this processing. Furthermore, after the program code read from the storage medium has been written to the memory of the computer, the CPU of the computer or other components may perform some or all of the actual processing based on the instructions in the program code, and the functions of the above-described embodiments may be realized through this processing.

Furthermore, by distributing the software program code that realizes the functions of the embodiment via a network, it is also possible to store it in the storage means of the system or device, such as the hard disk or memory, or in the storage media, such as CD-RW or CD-R, and have the computer (or CPU or MPU) of the system or device read and execute the program code stored in the storage means or storage media when it is used.

Finally, it should be understood that the processes and techniques described herein are not inherently tied to any particular device and can be implemented by any suitable combination of components. Furthermore, various types of general purpose devices can be used in accordance with the teachings described herein. It may be found advantageous to construct a dedicated device to carry out the steps of the methods described herein. In addition, various inventions can be formed by combining the plurality of components disclosed in the embodiments as appropriate. For example, some of the components illustrated in the embodiments can be deleted. Furthermore, the components across different embodiments can be combined as appropriate. This disclosure has been described in relation to specific examples, but these are for illustrative purposes only and not for the purpose of limitation in any way. Those skilled in the art will appreciate that there are many combinations of hardware, software and firmware that may be used to implement the present disclosure. For example, the described software may be implemented in a wide range of programming or scripting languages, such as assembler, C/C++, Perl, Shell, PHP, Java(TM), and the like.

Furthermore, in the above-described embodiment, the control lines and information lines are illustrated as being necessary for explanation, and not necessarily all the control lines and the information lines are illustrated on the product. All components may be interconnected.

### Reference Signs List

- 1: Performance measurement device
- 2: Sensor group
- 3: Construction machine
- 4: User terminal
- 10: Processor
- 20: Storage device
- 30: Communication device
- 21: Accelerometer
- 22: Microphone
- 23: Camera
- 101: Information acquisition section
- 102: Soundness diagnosis section
- 103: Operation classification section
- 104: Basic performance measurement and diagnosis section
- 201: Data storage section
- 202: Performance reference value holding section
- 203: Operating range reference value holding section
- 204: Operation-specific representative waveform holding section
- 205: Recommendation information holding section
- 206: Action list holding section

## Claims

1. A machine performance diagnosis apparatus for diagnosing soundness of operation of a construction machine, comprising
a storage device that stores reference waveform data for each of a plurality of operations of the construction machine, and a performance reference value and a tolerance value for each of the plurality of operations; and
a processor that executes a process of diagnosing the soundness of the construction machine,
wherein the processor executes:
a process of identifying an actually performed operation of the construction machine by comparing the sensor waveform data acquired by detecting the actually performed operation using a sensor with the reference waveform data held in the storage device; and
a process of acquiring the performance reference value and the tolerance value corresponding to the identified operation from the storage device, and comparing the acquired performance reference value and tolerance value with the feature value in the actually performed operation acquired from the sensor waveform data to determine the soundness of the construction machine.

2. The machine performance diagnosis apparatus according to claim 1,
wherein the processor identifies the actually performed operation by performing pattern matching between the sensor waveform data of the actually performed operation and the reference waveform data.

3. The machine performance diagnosis apparatus according to claim 1,
wherein the performance reference value indicates a reference time for each of the plurality of operations, and the tolerance value is information indicating an extent to which a deviation from the reference time is acceptable for the operation to be sound, and
wherein the processor detects a start time and an end time of the actually performed operation of the construction machine from the sensor waveform data, calculates a duration of the actually performed operation in response thereto, and determines the soundness of the construction machine by comparing the calculated duration as the feature value with the reference time and the tolerance value.

4. The machine performance diagnosis apparatus according to claim 1,
wherein the sensor waveform data is acquired by detecting the actually performed operation with an accelerometer.

5. The machine performance diagnosis apparatus according to claim 1,
wherein the processor executes a process of outputting a determination result by a process of determining the soundness of the construction machine to a display section.

6. The machine performance diagnosis apparatus according to claim 5,
wherein the processor outputs values of an angle of a predetermined portion of the construction machine at a start position and an angle of the predetermined portion at an end position detected by an angle sensor when the construction machine is actually operated, together with the determination result of the soundness of the construction machine, to the display section.

7. The machine performance diagnosis apparatus according to claim 5,
wherein the storage device further stores a plurality of types of recommendation information regarding an action to be taken according to a deviation degree from the performance reference value, and
wherein the processor acquires the recommendation information corresponding to the determination result from the storage device, and outputs the recommendation information together with the determination result to the display section.

8. The machine performance diagnosis apparatus according to claim 5,
wherein the storage device further holds action list information indicating a diagnostic state and a diagnosis result for each of the plurality of operations of the construction machine, and
wherein the processor updates the action list information by inputting information indicating the diagnostic state of diagnostic completion and the determination result for the operation for which the process of determining the soundness is completed in the action list information, and outputs the updated action list information to the display section.

9. The machine performance diagnosis apparatus according to claim 5,
wherein the processor stores the determination result and detection data of the actually performed operation in the storage device as a diagnostic history log when the processor detects a save instruction.

10. The machine performance diagnosis apparatus according to claim 5,
wherein when the processor detects a repeat instruction, the processor resets the determination result and the detection data by the sensor for the identified operation and performs a diagnosis again for a same operation.

11. The machine performance diagnosis apparatus according to claim 5,
wherein the storage device further holds a plurality of types of recommendation information regarding an action to be taken according to a deviation degree from the performance reference value, information on an operating range reference value indicating a reference of an operating range for the identified operation, and history log information including a past diagnosis result, and
wherein the processor:
receives information on a model of the construction machine and an instruction to start and stop of a diagnosis, as input information, and
outputs the determination result, information on a type of the identified operation, information on the operating range reference value of the identified operation, the performance reference value of the identified operation, the recommendation information corresponding to the determination result, and detection data of the identified operation by the sensor, as output information.

12. A construction machine diagnosis system comprising
a sensor group that include at least one sensor;
a user terminal; and
the machine performance diagnosis apparatus according to claim 1,
wherein the processor of the machine performance diagnosis apparatus outputs a result of a process of determining the soundness of the construction machine to the display section of the user terminal.

13. The construction machine diagnosis system according to claim 12,
wherein the sensor group and the machine performance diagnosis apparatus are implemented in the user terminal.
